# EUROPÄISCHE PATENTSCHRIFT

(11) **EP 1 036 728 B1**
(45) Veröffentlichungstag und Bekanntmachung des Hinweises auf die Patenterteilung: **11.09.2002**
(21) Anmeldenummer: 00103335.6
(22) Anmeldetag: 21.02.2000
(51) Int. Cl.: B62D 25/06

(54) **Längsgesickter Träger, insbesondere Dachträger für ein Kraftfahrzeug**
Beam with longitudinal creases, especially for a motor vehicle roof
Poutrelle à rainures longitudinales, en particulier pour toit de véhicule à moteur

(30) Priorität: 18.03.1999 DE 19912183
(43) Veröffentlichungstag der Anmeldung: 20.09.2000
(73) Patentinhaber: Volkswagen Aktiengesellschaft, 38436 Wolfsburg (DE)
(72) Erfinder: Schulze, Hilmar, 39365 Marienborn (DE); Cordes, Rainer, 38559 Wagenhoff (DE)

(56) Entgegenhaltungen:
- EP-A- 0 856 455
- DE-A- 3 029 058
- DE-A- 4 224 303
- DE-A- 19 718 786
- DE-B- 1 154 360
- SE-C- 508 235
- US-A- 1 328 200

## Beschreibung

Die Erfindung betrifft einen längsgesickten Träger gemäß dem Oberbegriff des Patentanspruchs 1.

Aus der US-A-1328200 ist ein längsgesickter Dachquerträger bekannt, an dessen Enden Anbindungen an die Fahrzeugkarosserie vorgesehen sind. Ausgehend von einem mittleren Bereich minimaler Breite nimmt die Breite des Trägers in Richtung auf seine Enden hin kontinuierlich zu, wohingegen die Tiefe der einzigen vorgesehenen Längssicke ausgehend von dem mittleren Bereich maximaler Tiefe in Richtung zu den Enden hin entsprechend abnimmt.

Die SE-C-508235 offenbart einen aus zwei gesickten Blechen hergestellten rohrförmigen, beispielsweise als Dachquerträger verwendbaren Träger mit an seinen Enden vorgesehenen Anbindungsflanschen. Sämtliche Sicken erstrecken sich in Längsrichtung durchgehend zwischen den Enden des Trägers.

Der Erfindung liegt die Aufgabe zugrunde, einen längsgesickten Träger so auszubilden, daß er einerseits bei geringem Materialaufwand hohe Festigkeitseigenschaften aufweist, andererseits seine im Bereich seiner Enden erfolgende Anbindung an anderen Trägern oder dergleichen einfach herstellbar ist.

Die erfindungsgemäße Lösung dieser Aufgabe besteht in den kennzeichnenden Merkmalen des Patentanspruchs; vorteilhafte Ausbildungen der Erfindung beschreiben die Unteransprüche.

Der erfindungsgemäße Träger, dessen Breite ausgehend von einem mittleren Bereich minimaler Breite in Richtung auf seine der Anbindung dienenden Enden kontinuierlich zunimmt, weist durchgehende Längssicken in seinem mittleren Bereich und an seinen Längsrändern auf, wobei zumindest einzelne der Längssicken im Bereich ihrer Scheitelflächen Vertiefungen zur Aufnahme eines Klebers aufweisen. Insbesondere die durchgehenden längsrandnahen Längssicken sorgen nicht nur für eine Versteifung in Längsrichtung des Trägers, also bei einem Dachquerträger in Querrichtung des Fahrzeugs, sondern auch in Richtung der Breite des Trägers, also bei einem Dachträger eines Kraftfahrzeugs in Längsrichtung des Fahrzeugs. Der Kleber dient zur Herstellung einer Verbindung mit einem auf dem Träger aufliegenden flächigen Bauteil, also beispielsweise bei einem Dachquerträger des Fahrzeugdachs. Insbesondere in diesem Falle ist es zweckmäßig, die Längssicken mit in Querrichtung ebenen Scheitelflächen auszuführen, damit eine gute Anlage im Beispiel des Dachs sichergestellt ist. Im übrigen wird man den "doppelfächerartigen" Träger so formen, daß im Bedarfsfall eine großflächige Anlage des Trägers an einem anderen Bauteil, beispielsweise einem Dach, sichergestellt ist.

Der Breitenverlauf des Trägers wird im allgemeinen über seine Länge nicht linear sein, sondern die Ränder des Trägers werden auf Kurven liegen, so daß sich nirgends Spannungsspitzen ergeben. Besonders vorteilhaft ist es, wenn zusätzlich zwischen den durchgehenden Sicken im Bereich der Enden des Trägers längsverlaufende Sickenstücke vorgesehen sind.

Vorteilhaft ist es zudem, wenn die Scheitelflächen zumindest einzelner der Sickenstücke mit Längsvertiefungen zur Aufnahme eines Klebers versehen sind, wobei die Scheitelflächen vorteilhafterweise eben ausgebildet sind.

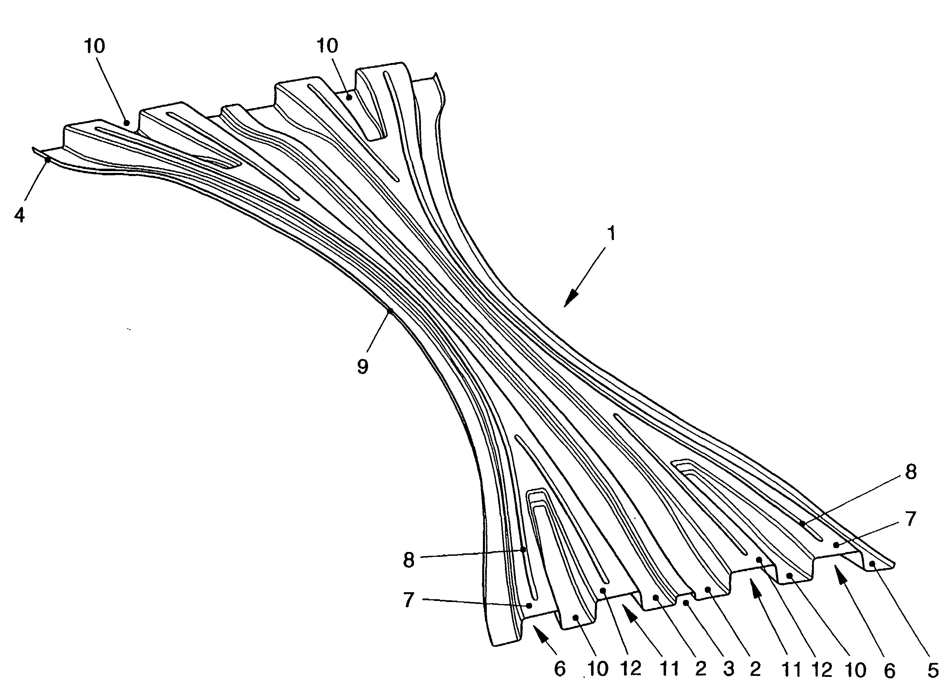

Ein Ausführungsbeispiel der Erfindung wird im folgenden anhand der Zeichnung erläutert, die eine perspektivische Draufsicht auf einen erfindungsgemäßen längsgesickten Dachquerträger für ein Kraftfahrzeug ist.

Der beispielsweise aus einem Blech durch Profilierung hergestellte Dachquerträger 1 enthält eine durchgehende mittlere, in der Darstellung nach oben offene Längssicken 2 und eine durchgehende mittlere, nach unten offene Längssicke 3; diese Längssicken erstrecken sich zwischen den Enden 4 und 5 des Trägers 1 und haben konstante Querschnittsabmessungen. Ebenfalls durchgehend sind längsrandnahe Längssicken 6, die in Richtung nach unten offen sind. Alle Längssicken haben im wesentlichen rechteckförmige Querschnitte. Betrachtet man nochmals die äußeren durchgehenden Längssicken 6, so sind ihre Scheitelflächen 7 mit Längsvertiefungen 8 zur Aufnahme eines Klebers versehen, der zur Herstellung einer Klebverbindung zwischen dem Dachquerträger 1 einerseits und dem zugeordneten Fahrzeugdach andererseits dient.

Wie aus der Zeichnung ersichtlich, besitzt der beispielhaft dargestellte Träger 1 einen Verlauf seiner Breite, der vom mittleren Trägerbereich 9 in Richtung auf seine Enden 4 und 5 kontinuierlich zunimmt. Dadurch wird zwischen den durchgehenden Längssicken 2, 3 und 6 an den Enden 4 und 5 des Dachquerträgers 1 Platz geschaffen zur Unterbringung von ebenfalls längsverlaufenden, aber gegenüber der Länge des Trägers 1 relativ kurzen Sickenstücken 10 an beiden Enden 4 und 5, wobei sich die Sickenstücke an verschiedenen Enden paarweise gegenüberliegen, also gleichsam jeweils eine gemeinsame Sicke bilden, die im mittleren Bereich 9 des Trägers 1 unterbrochen ist.

Während die Sickenstücke 10 in Richtung nach oben offen sind, sind weitere Sickenstücke 11 vorgesehen, die nach unten offene Querschnitte aufweisen und die auf ihren Scheitelflächen 12 wieder Rinnen 13 zur Aufnahme eines Trägers aufweisen.

Mit der Erfindung ist demgemäß ein gattungsgemäßer längsgesickter Träger geschaffen, der bei minimalem Platz- und Gewichtsaufwand eine hohe Festigkeit, übrigens nicht nur in Längs-, sondern auch in Querrichtung (bezogen auf den Verlauf des Trägers), bietet, und der relativ leicht mit endseitigen weiteren Trägern oder dergleichen verbindbar ist.

## Patentansprüche

1. Längsgesickter Träger (1) mit an seinen Enden (4, 5) vorgesehenen Anbindungen, insbesondere Dachquerträger für ein Kraftfahrzeug, wobei die Breite des Trägers (1), ausgehend von einem mittleren Bereich (9) minimaler Breite, in Richtung auf seine Enden (4, 5) kontinuierlich zunimmt, **dadurch gekennzeichnet, daß** zumindest eine mittlere Längssicke (2) und zumindest je eine längsrandnahe Längssicke (6) sich zwischen den Enden (4, 5) des Trägers (1) durchgehend erstrecken und daß zumindest einzelne der Längssicken (6) im Bereich ihrer Scheitelflächen (7) Vertiefungen (8) zur Aufnahme eines Klebers aufweisen.

2. Träger nach Anspruch 1, **dadurch gekennzeichnet, daß** zwischen diesen durchgehenden Sicken (2, 6) nur im Bereich der Enden (4, 5) des Trägers (1) längsverlaufende Sickenstücke (10, 11) vorgesehen sind.

3. Träger nach Anspruch 1 oder 2, **dadurch gekennzeichnet, daß** Sickenstücke (10, 11) im Bereich unterschiedlicher Enden (4, 5) des Trägers (1) paarweise im mittleren Bereich (9) des Trägers (1) unterbrochene Längssicken bilden.

4. Träger nach Anspruch 2 oder 3, **dadurch gekennzeichnet, daß** zumindest einzelne der Sickenstücke (11) im Bereich ihrer Scheitelflächen (12) Vertiefungen (13) zur Aufnahme eines Klebers aufweisen.

5. Träger nach einem der Ansprüche 1 bis 4, **dadurch gekennzeichnet, daß** zumindest eine mittlere durchgehende Längssicke (2) einen über ihre Länge konstanten Querschnitt aufweist.

## Claims

1. Longitudinally beaded support (1) having connections provided at its ends (4, 5), in particular roof cross member for a motor vehicle, the width of the support (1) continuously increasing, from a central region (9) of minimal width, in the direction of its ends (4, 5), **characterized in that** the at least one central longitudinal bead (2) and at least one longitudinal bead (6) close to the longitudinal edge extend continuously between the ends (4, 5) of the support (1), and **in that** at least individual beads of the longitudinal beads (6) have depressions (8) in the region of their apex surfaces (7) in order to receive an adhesive.

2. Support according to Claim 1, **characterized in that** between these continuous beads (2, 6) bead sections (10, 11) running longitudinally only in the region of the ends (4, 5) of the support (1) are provided.

3. Support according to Claim 1 or 2, **characterized in that** bead sections (10, 11) in the region of different ends (4, 5) of the support (1) form longitudinal beads in pairs which are interrupted in the central region (9) of the support (1).

4. Support according to Claim 2 or 3, **characterized in that** at least individual sections of the bead sections (11) have depressions in the region of their apex surfaces (12) for receiving an adhesive.

5. Support according to one of Claims 1 to 4, **characterized in that** at least one central, continuous longitudinal bead (2) has a cross section which is constant over its length.

## Revendications

1. Poutrelle (1) à rainures longitudinales, avec des attaches prévues à ses extrémités (4, 5), en particulier traverse pour un toit de véhicule à moteur, dans laquelle la largeur de la poutrelle (1) augmente de façon continue en direction de ses extrémités (4, 5) depuis une région centrale (9) de largeur minimale, **caractérisée en ce qu'**au moins une rainure longitudinale centrale (2) et au moins une rainure longitudinale (6) proche de chaque bord s'étendent de façon ininterrompue entre les extrémités (4, 5) de la poutrelle (1) et **en ce qu'**au moins certaines des rainures longitudinales (6) présentent, dans la région de leurs faces supérieures (7), des creux (8) destinés à recevoir une colle.

2. Poutrelle suivant la revendication 1, **caractérisée en ce qu'**il est prévu des portions de rainures longitudinales (10, 11) entre ces rainures ininterrompues (2, 6), uniquement dans la région des extrémités (4, 5) de la poutrelle (1).

3. Poutrelle suivant la revendication 1 ou 2, **caractérisée en ce que** des portions de rainures (10, 11) forment par paires, dans la région des extrémités différentes (4, 5) de la poutrelle (1), des rainures longitudinales interrompues dans la région centrale (9) de la poutrelle (1).

4. Poutrelle suivant la revendication 2 ou 3, **caractérisée en ce qu'**au moins certaines des portions de rainures (11) présentent, dans la région de leurs faces supérieures (12), des creux (13) destinés à recevoir une colle.

5. Poutrelle suivant l'une quelconque des revendications 1 à 4, **caractérisée en ce qu'**au moins une rainure longitudinale centrale ininterrompue (2) présente une section transversale constante sur sa longueur.
